# EUROPEAN PATENT APPLICATION

(11) **EP 4 560 771 A1**
(43) Date of publication of application: **28.05.2025**
(21) Application number: 22969726.3
(22) Date of filing: 29.12.2022
(51) Int. Cl.: H01M 10/0587

(54) **WINDING APPARATUS AND WINDING METHOD**

(71) Applicant: Contemporary Amperex Technology Co., Limited, Fujian 352100 (CN)
(72) Inventor: GUO, Suogang, Ningde City, Fujian 352100 (CN); FU, Chenghua, Ningde City, Fujian 352100 (CN); YE, Yonghuang, Ningde City, Fujian 352100 (CN); CHANG, Wen, Ningde City, Fujian 352100 (CN)
(74) Representative: Gong, Jinping
(86) International application number: PCT/CN2022/143657
(87) International publication number: WO 2024/138579

(57) **Abstract**

The application provides a winding device and a winding method. The winding device includes a feeding mechanism and at least two winding members, and the feeding mechanism is used to provide an electrode sheet and a separation membrane. The winding device is provided with a winding station and a non-winding station, and each of the winding members is movable between the winding station and the non-winding station. The at least two winding members are configured as follows: when one of the winding members winds the electrode sheet and the separation membrane for a preset amount of turns at the winding station, said one of the winding members moves from the winding station to the non-winding station, so as to cause the separation membrane to pass through another of the winding members moving to the winding station; said one of the winding members releases a part of the separation membrane wound on said one of the winding members when said another of the winding members winds the electrode sheet and the separation membrane, so as to cause the part of the separation membrane released by said one of the winding members to be wound onto said another of the winding members.

## Description

### TECHNICAL FIELD

The application relates to the field of battery technology, and in particular to a winding device and a winding method.

### BACKGROUND

Battery cells are widely used in electronic equipments such as mobile phones, laptop computers, electric bicycles, electric automobiles, electric aircrafts, electric ships, electric toy cars, electric toy ships, electric toy planes, and electric tools etc.

In the production process of battery cells, it is necessary to use winding device to wind the electrode sheet and separation membrane to form the electrode assembly of the battery cell. The electrode assembly is the core component for realizing the charging and discharging functions of battery cells, and its safety issue cannot be ignored. How to enhance safety of the battery cells is a technical problem demanding prompt solution in the battery technology.

### SUMMARY

The application provides a winding device and a winding method that can improve safety of the wound electrode assemblies.

In a first aspect, the embodiments of the application provide a winding device including a feeding mechanism and at least two winding members, and the feeding mechanism is used to provide an electrode sheet and a separation membrane. The winding device is provided with a winding station and a non-winding station, and each of the winding members is movable between the winding station and the non-winding station. The at least two winding members are configured as follows: when one of the winding members winds the electrode sheet and the separation membrane for a preset amount of turns at the winding station, said one of the winding members moves from the winding station to the non-winding station, so as to cause the separation membrane to pass through another of the winding members moving to the winding station; said one of the winding members releases a part of the separation membrane wound on said one of the winding members when said another of the winding members winds the electrode sheet and the separation membrane, so as to cause the part of the separation membrane released by said one of the winding members to be wound onto said another of the winding members.

In the aforesaid technical solution, by switching each of the winding members between the winding station and the non-winding station, it is possible to prestore a certain size of the separation membrane on the winding member located at the non-winding station before the winding member located at the winding station winds the electrode sheet and the separation membrane; when the winding member located at the winding station winds the electrode sheet and the separation membrane, the separation membrane prestored on the winding member at the non-winding station and the newly transported separation membrane are stacked and wound around the outer circumference of the winding member located at the winding station, and thereby there are a plurality of layers of the separation membrane between the positive and negative electrode sheets in the inner turns, so that the possibility of lithium dendrites piercing the separation membrane is reduced when lithium precipitation occurs, the risk of short circuit between the positive and negative electrode sheets is reduced, and safety is improved. By providing a plurality of winding members and by switching the position of each winding member, it is possible to achieve continuous winding of the electrode assembly, reduce manual threading processes, improve winding efficiency, and reduce costs.

In some embodiments, the winding device further includes a switching mechanism, and the two winding members are arranged on the switching mechanism. The switching mechanism is used to drive each of the winding members to move between the winding station and the non-winding station. By providing the switching mechanism, it is possible for the winding member to automatically switch between the winding station and the non-winding station, improving winding efficiency and achieving industrial production of the electrode assembly.

In some embodiments, the switching mechanism is configured to be rotatable. The switching mechanism can drive a plurality of winding members to rotate around a rotation axis of the switching mechanism, so as to facilitate switching of each winding member between the winding station and the non-winding station, thereby simplifying the structure of the winding device and improving switching efficiency.

In some embodiments, the winding device further includes a first roller and a second roller arranged on the switching mechanism, and the first roller and the second roller are centrosymmetric about a rotation axis of the switching mechanism. One of the first roller and the second roller is used to guide the separation membrane between the two winding members to move.

The first roller and the second roller are centrosymmetric about the rotation axis of the switching mechanism. As the switching mechanism rotates, the first roller and the second roller can alternately support and guide the separation membrane to move, and provide effective support for the separation membrane.

In some embodiments, the switching mechanism includes a rotary plate, a rotary drum and two brackets. The two winding members are arranged on the rotary plate. The rotary drum is arranged on the rotary plate and located between the two winding members. The two brackets are arranged on two sides of the rotary drum respectively and fixed to the rotary drum, and the first roller and the second roller are arranged on the two brackets respectively.

When the rotary plate drives the winding members to move between the winding station and the non-winding station, it also drives the rotary drum to rotate; correspondingly, the rotary drum drives the first roller and the second roller to rotate around a rotation axis of the rotary drum through the two brackets, so that the first roller and the second roller alternately support and guide the separation membrane to move, reducing the risk of wrinkling of the separation membrane due to the movement of the winding members.

In some embodiments, the winding device further includes a cutting blade mechanism, and the cutting blade mechanism is arranged between the two winding members and used to cut off the separation membrane.

After the winding member located at the non-winding station unwinds the separation membrane thereon for a preset size, the cutting blade mechanism can cut off the separation membrane, so as to reduce the risk of excessive release of the separation membrane by the winding member located at the non-winding station, so that the size of the separation membrane wound on the winding member located at the non-winding station meets the requirements.

In some embodiments, the two winding members have a same shape and a same size, so as to facilitate continuous production of electrode assemblies of the same specification and reduce the difficulty of controlling the winding device.

In some embodiments, the winding device further includes a driver for driving the winding member and switching a rotation direction of the winding member.

When a winding member is located at the winding station, the driver can drive the winding member to rotate in a positive direction to wind the electrode sheet and the separation membrane; when the winding member is located at the non-winding station, the driver can drive the winding member to rotate in the opposite direction to release the separation membrane.

In a second aspect, the embodiments of the application also provide a winding method including: providing a separation membrane and an electrode sheet; winding the electrode sheet and the separation membrane on one winding member located at a winding station for a preset amount of turns; moving said one winding member to a non-winding station, and moving another winding member to the winding station, so as to cause the separation membrane to pass through said another winding member; said another winding member winding the electrode sheet and the separation membrane, while said one winding member releasing a part of the separation membrane wound thereon, so as to cause the part of the separation membrane released by said one winding member to be wound onto said another winding member.

The embodiments of the application, by switching the position of each winding member, can achieve continuous winding of the electrode assembly, reduce manual threading processes, improve winding efficiency and reduce costs.

In some embodiments, the winding method further includes: after a size of the separation membrane released by said one winding member reaches a preset size, cutting off the separation membrane between said one winding member and said another winding member; taking out an electrode assembly formed by the electrode sheet and the separation membrane on said one winding member.

After the winding member located at the non-winding station unwinds the separation membrane thereon for a preset size, the separation membrane is cut off, so as to reduce the risk of excessive release of the separation membrane by the winding member located at the non-winding station, so that the size of the separation membrane wound on the winding member located at the non-winding station meets the requirements. After cutting off the separation membrane, the electrode assembly on the winding member located at the non-winding station is taken out to allow the winding member to enter the next winding cycle.

### BRIEF DESCRIPTION OF THE DRAWINGS

In order to illustrate the technical solutions in embodiments of the application more clearly, the drawings to be used in the embodiments of the application will be briefly described below. Obviously, the drawings described below are merely some embodiments of the application, and it is also possible for a person of ordinary skill in the art to obtain further drawings from these drawings without creative work.
Figs. 1 to 4 are schematic views of a winding device in different operation states provided by some embodiments of the application respectively;
Fig. 5 is a schematic view of an electrode assembly wound by a winding device provided by some embodiments of the application;
Fig. 6 is a schematic structural view of a winding device provided by a specific embodiment of the application;
Fig. 7 is a schematic view of the winding device of Fig. 6 in another state;
Fig. 8 is a schematic structural view of a winding device provided by another embodiment of the application;
Fig. 9 is a schematic block diagram of a winding method provided by some embodiments of the application.

The views are not necessarily plotted in actual proportion in the drawings.

### DETAILED DESCRIPTION

In order to make the purpose, the solution and the advantages of the embodiments of the application clearer, the technical solution of the embodiments of the application will be described clearly below with reference to the accompanying drawings. It is obvious that the embodiments as described are only a part of the embodiments of the application, rather than all of the embodiments. Based on the embodiments of the application, all other embodiments obtained by a person of ordinary skill in the art without creative efforts shall fall within the protection scope of the application.

Unless otherwise defined, all the technical and scientific terms used in the application have the same meanings as commonly understood by a person skilled in the art of the application. The terms used in the description of this application is for the purpose of describing specific embodiments only and is not intended to limit the application. The terms "comprise", "have" and any variations thereof in the description and claims of the application and the brief description of the drawings above are intended to cover non-exclusive inclusions. The terms "first", "second" and the like in the description and claims of the application or in the aforesaid drawings are used to distinguish different objects and are not used to describe a particular order or primary-secondary relationship.

Reference to "embodiment" in the application means that the specific features, structures, or characteristics described in connection with the embodiment may be included in at least one embodiment of the application. The presence of this phrase at various locations in the description does not necessarily refer to the same embodiment, nor is it a separate or alternative embodiment that is mutually exclusive from other embodiments.

In the description of the application, it is noted that, except as otherwise stipulated or limited explicitly, the terms "mount", "link", "connect", "attach" shall be interpreted expansively, for example, it may be fixed connection, removable connection or integral connection; may be direct connection or indirect connection via an intermediate medium, or may be communication inside two elements. For a person of ordinary skill in the art, the specific meaning of the above terms in the application can be interpreted depending on the specific situation.

In the application, the term "and/or" is merely to describe an association relationship of associated objects, meaning that there may be three relationship, for example, A and/or B may mean three cases that A exists alone, A and B exist simultaneously, and B exists alone. In addition, the character "/" in the application generally indicates that the related objects before and after have an "or" relationship.

In the embodiments of the application, the same reference numerals denote the same components, and in the different embodiments, detailed description of the same components is omitted for brevity. It should be understood that the thickness, length, width, and the like of the various components, and the overall thickness, length, width, and the like of the integrated device in the embodiments of the application shown in the drawings are merely illustrative and should not be construed as limiting of the application.

Reference to "a plurality of" in the application means two or more (including two).

Battery cells, such as lithium-ion battery cells, lithium sulfur battery cells, sodium lithium ion battery cells, sodium ion battery cells, or magnesium ion battery cells, have the advantages of high energy density, high power density, large amount of recycling, and long storage time, and have been widely used in electric devices suitable for battery cells. For example, the electric device may be a vehicle, a mobile phone, a portable device, a notebook computer, a ship, a spacecraft, an electric toy and a power tool, etc. The vehicle may be a fuel, gas or new energy vehicle. The new energy vehicle may be a pure electric vehicle, a hybrid vehicle, an extended-range vehicle, etc. The spacecraft includes an airplane, a rocket, an aerospaceplane, a spaceship, etc. The electric toy includes a fixed or movable electric toy, for example, a game machine, an electric car toy, an electric ship toy, and an electric airplane toy, etc. The power tool includes a metal cutting power tool, a grinding power tool, an assembly power tool, and a railway power tool, for example, an electric drill, an electric grinder, an electric wrench, an electric screwdriver, an electric hammer, an impact electric drill, a concrete vibrator and an electric planer, etc.

The battery cell includes an electrode assembly and electrolyte, and the electrode includes a positive electrode sheet, a negative electrode sheet, and a separator membrane. The battery cell operates mainly by moving metal ions between the positive and negative electrode sheets. The positive electrode sheet includes a positive electrode current collector and a positive electrode active material layer coated on a surface of the positive electrode current collector. The positive electrode current collector includes a positive electrode current collecting zone and a positive electrode tab protruding from the positive electrode current collecting zone. The positive electrode current collecting zone is coated with the positive electrode active material layer, and at least a part of the positive electrode tab is not coated with the positive electrode active material layer. Taking a lithium ion battery cell as an example, the material of the positive electrode current collector may be aluminum, the positive electrode active material layer includes a positive electrode active material, and the positive electrode active material may be lithium cobaltate, lithium iron phosphate, lithium ternary or lithium manganate, or the like. The negative electrode sheet includes a negative electrode current collector and a negative electrode active material layer coated on a surface of the negative electrode current collector. The negative electrode current collector includes a negative electrode current collecting zone and a negative electrode tab protruding from the negative electrode current collecting zone. The negative electrode current collecting zone is coated with the negative electrode active material layer, and at least a part of the negative electrode tab is not coated with the negative electrode active material layer. The material of the negative electrode current collector may be copper, the negative electrode active material layer includes a negative electrode active material, and the negative electrode active material may be carbon, silicon, or the like. The material of the separator membrane may be PP (polypropylene) or PE (polyethylene) or the like.

In related technologies, after the electrode assembly is formed by winding, there is an area difference between the positive and negative electrode sheets in the bending region of the innermost few turns of the electrode assembly within the same angle range, which is prone to lithium precipitation. Tiny lithium dendrites penetrate the separation membrane and cause internal short circuit and heat generation, melting out relatively large holes in the separation membrane. The remaining lithium dendrites are more likely to come into contact with the positive electrode sheet and release more heat, thereby causing the risks of failure of the electrode assembly and thermal runaway of the electrode assembly.

The inventor has attempted to install several layers of the separation membrane between the positive and negative electrode sheets in the innermost turns of the electrode assembly. Even if lithium precipitation occurs, lithium crystallization is not easy to penetrate the separation membrane, thus overcoming the above defect and ensuring good safety performance of the electrode assembly even when lithium precipitation occurs in the innermost turns.

In order to provide more layers of the separation membrane between the innermost turns of the positive and negative electrode sheets of the electrode assembly, the inventor has attempted to install several additional separation membrane feeding mechanisms in the winding device; the additionally installed separation membrane feeding mechanisms can provide several additional layers of the separation membrane during winding of the electrode assembly.

However, the inventor has found that before each electrode assembly is wound, the additional separation membranes are required to be manually introduced into the winding member, resulting in a low winding efficiency of the electrode assembly.

In view of this, the inventor of the application provides a technical solution that achieves, by providing a plurality of winding members and by switching the position of each winding member, continuous winding of the electrode assemblies by setting multiple winding members and switching the positions of each winding member, and thereby achieves industrial production of the electrode assembly without adding new separation membrane feeding mechanisms, improving winding efficiency and reducing costs.

The winding device of the embodiments of the application will be further described below in combination with the drawings.

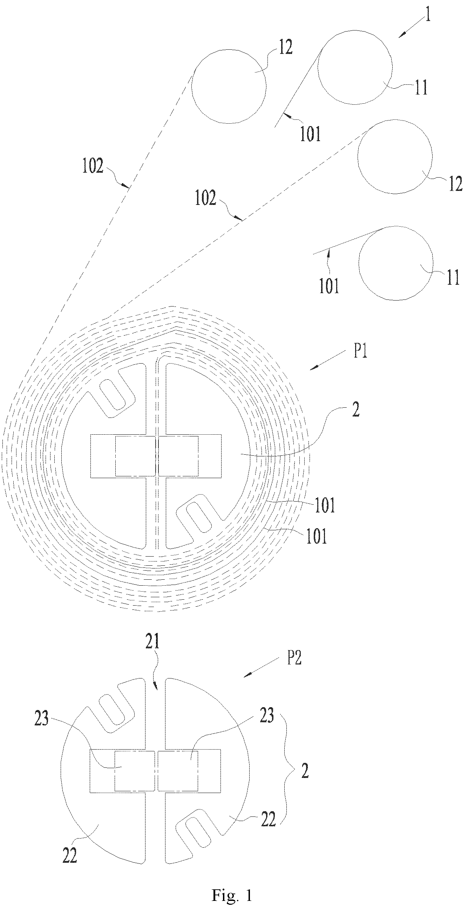

Figs. 1 to 4 are schematic views of a winding device in different operation states provided by some embodiments of the application respectively.

As shown in Figs. 1 to 4, the embodiments of the application provide a winding device including a feeding mechanism 1 and at least two winding members 2, and the feeding mechanism 1 is used to provide an electrode sheet 101 and a separation membrane 102. The winding device is provided with a winding station P1 and a non-winding station P2, and each of the winding members 2 is movable between the winding station P1 and the non-winding station P2. The at least two winding members 2 are configured as follows: when one of the winding members 2 winds the electrode sheet 101 and the separation membrane 102 for a preset amount of turns at the winding station P1, the one of the winding members 2 moves from the winding station P1 to the non-winding station P2, so as to cause the separation membrane 102 to pass through another of the winding members 2 moving to the winding station P1; the one of the winding members 2 releases a part of the separation membrane 102 wound on the one of the winding members 2 when said another of the winding members 2 winds the electrode sheet 101 and the separation membrane 102, so as to cause the part of the separation membrane 102 released by the one of the winding members 2 to be wound onto said another of the winding members 2.

The winding device of the embodiments of the application can be used for winding and forming of an electrode assembly. The battery cell for which the electrode assembly is applicable may be a lithium ion battery cell, a lithium sulfur battery cell, a sodium lithium ion battery cell, a sodium ion battery cell or a magnesium ion battery cell, which is not limited by the embodiments of the application.

For example, the electrode assembly may be formed by winding two electrode sheets 101 and two separation membranes 102. The separation membrane 102 is an insulator located between two electrode sheets 101. For example, one of the electrode sheets 101 is an electrode sheet, and the other of the electrode sheets 101 is a negative electrode sheet.

The winding member 2 is used to wind the electrode sheet 101 and the separation membrane 102. For example, the winding member 2 may be a shaft-shaped structure that can conduct a spin motion around its own axis. When the winding member 2 rotates, the winding member 2 winds the separation membrane 102 and the electrode sheet 101 together to form a wound electrode assembly. The cross sectional shape of the winding member 2 itself may be generally elliptical, circular, or rhombic. Optionally, the material of the winding member 2 may be aluminum alloy or alloy steel.

In the application, a plurality of winding members 2 may adopt the same structure, or may also adopt different structures. For example, for any two winding members 2 in the winding device, it may be the case that one is a circular winding member 2 and the other is an elliptical winding member 2, or may also be the case that both are circular winding members 2. For example, any two winding members 2 in the winding device may have the same diameter or may also have different diameters.

The feeding mechanism 1 can provide the separation membrane 102 and the electrode sheet 101 to the winding member 2 located at the winding station P1. For example, the feeding mechanism 1 includes a separation membrane feeding device 12 and an electrode sheet feeding device 11, the separation membrane feeding device 12 is used to provide the separation membrane 102, and the electrode sheet feeding device 11 is used to provide the electrode sheet 101.

The separation membrane feeding device 12 can provide the separation membrane 102 to the winding member 2 during rotation of the winding member 2 located at the winding station P1. Optionally, the separation membrane feeding device 12 may include a separation membrane unwinding roller. Optionally, the amount of the separation membrane feeding device 12 may be two, and the two separation membrane feeding devices 12 provide two separation membranes 102 to the winding member 2.

The electrode sheet feeding device 11 can provide the electrode sheet 101 to the winding member 2 during rotation of the winding member 2 located at the winding station P1. Optionally, the electrode sheet feeding device 11 includes an electrode sheet unwinding roller. The amount of the electrode sheet feeding device 11 may be two, and the two separation membrane feeding devices 11 provide two electrode sheets 101 to the winding member 2.

The application does not limit the amount of the winding stations P1 and the non-winding stations P2. In other words, the amount of the winding station P1 may be one or more, and the amount of the non-winding station P2 may be one or more.

When the winding member 2 is located at the winding station P1, the winding member 2 can wind the electrode sheet 101 and the separation membrane 102 by rotating. When the winding member 2 is located at the non-winding station P2, the winding member 2 may perform other non-winding processes. In other words, the winding member 2 located at the non-winding station P2 generally does not wind the separation membrane 102 and the electrode sheet 101 provided by the feeding mechanism 1.

The winding member 2 may move to the winding station P1 to perform the process of winding the electrode sheet 101 and the separation membrane 102; or it may also move to the non-winding station P2 to perform other required processes.

For example, the winding device of the embodiments of the application may perform winding in the following manner.

As shown in Fig. 1, the winding member 2 located at the winding station P1 can wind the electrode sheet 101 and the separation membrane 102 for a preset amount of turns by rotating. The preset amount of turns may be set according to the requirements of the electrode assembly. The preset amount of turns for the electrode sheet 101 may be different from the preset amount of turns for the separation membrane 102.

After winding the electrode sheet 101 for a preset amount of turns, the electrode sheet 101 may be cut off.

The amount of turns of the separation membrane 102 of the electrode assembly to be prepared may be M; when the winding member 2 performs winding at the winding station P1, the separation membrane 102 may be wound for M+N turns. N may be set as required, for example, N may be 0.5, 1, 2, 3 or 5.

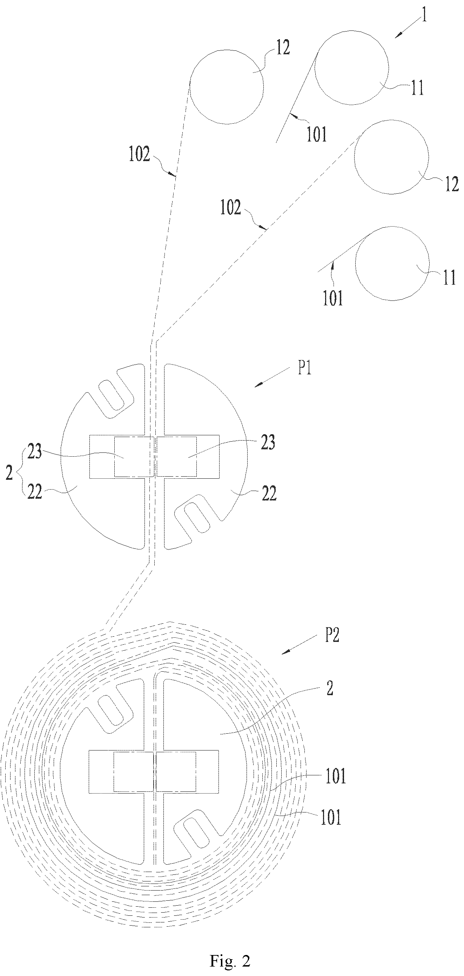

As shown in Fig. 2, when one winding member 2 winds the electrode sheet 101 and the separation membrane 102 for a preset amount of turns at the winding station P1, said one winding member 2 wound with the electrode sheet 101 and the separation membrane 102 moves from the winding station P1 to the non-winding station P2.

After said one winding member 2 wound with the electrode sheet 101 and the separation membrane 102 leaves the winding station P1, said another winding member 2 may move to the winding station P1. When said one winding member 2 reaches the non-winding station P2 while said another winding member 2 reaches the winding station P1, the separation membrane 102 passes through said another winding member 2 under the traction of said one winding member 2.

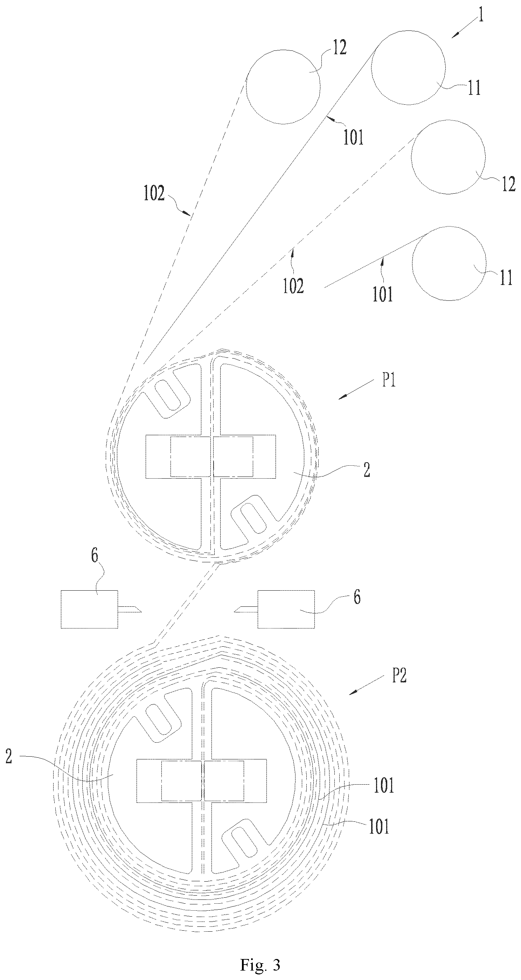

As shown in Fig. 3, said another winding member 2 moving to the winding station P1 starts winding the separation membrane 102 and the electrode sheet 101, and at the same time, the winding member 2 rotates and releases a part of the separation membrane 102 wound on said one winding member 2, so as to cause the part of the separation membrane 102 released by said one winding member 2 to be wound onto said another winding member 2. The part of the separation membrane 102 released by said one winding member 2 and the separation membrane 102 newly provided by the feeding mechanism 1 are stacked between the electrode sheets 101, so that there are a plurality of layers of the separation membrane 102 between the electrode sheets 101.

For example, said one winding member 2 may release the N turns of the separation membrane 102 redundantly wound thereon. After said one winding member 2 releases the N turns of the separation membrane 102, the separation membrane 102 may be cut off. The electrode sheet 101 and the separation membrane 102 on said one winding member 2 form an electrode assembly to be prepared.

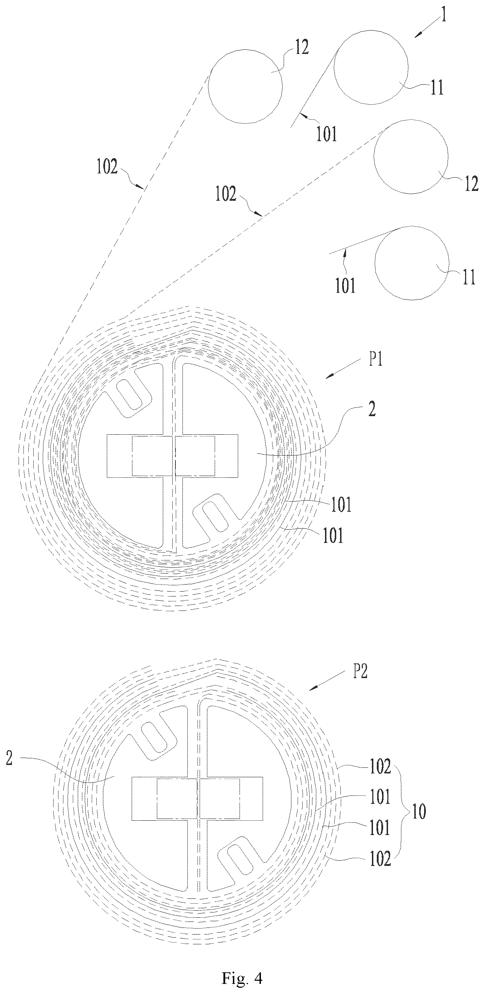

As shown in Fig. 4, said another winding member 2 located at the winding station P1 continues to wind the electrode sheet 101 and the separation membrane 102 until the electrode sheet 101 and the separation membrane 102 are wound for a preset amount of turns. During winding of said another winding member 2, other operations may be performed on the electrode assembly composed of the electrode sheet 101 and the separation membrane 102 wound on said one winding member 2. For example, operations such as gluing and unloading can be performed on the electrode sheet 101 and the separation membrane 102 wound on said one winding member 2.

For example, after said another winding member 2 located at the winding station P1 winds the electrode sheet 101 and the separation membrane 102 for the preset amount of turns and the electrode assembly on said one winding member 2 located at the non-winding station P2 is unloaded, said another winding member 2 moves from the winding station P1 to the non-winding station P2, and said one winding member 2 moves from the non-winding station P2 to the winding station P1, thereby entering the next cycle.

In the embodiments of the application, by switching each of the winding members 2 between the winding station P1 and the non-winding station P2, it is possible to prestore a certain size of the separation membrane 102 on the winding member 2 located at the non-winding station P2 before the winding member 2 located at the winding station P1 winds the electrode sheet 101 and the separation membrane 102; when the winding member 2 located at the winding station P1 winds the electrode sheet 101 and the separation membrane 102, the separation membrane 102 prestored on the winding member 2 at the non-winding station P2 and the newly transported separation membrane 102 are stacked and wound around the outer circumference of the winding member 2 located at the winding station P1, and thereby there are a plurality of layers of the separation membrane 102 between the positive and negative electrode sheets in the inner turns, so that the possibility of lithium dendrites piercing the separation membrane 102 is reduced when lithium precipitation occurs, the risk of short circuit between the positive and negative electrode sheets is reduced, and safety is improved. By providing a plurality of winding members 2 and by switching the position of each winding member 2, it is possible to achieve continuous winding of the electrode assembly, reduce manual threading processes, improve winding efficiency, and reduce costs.

In some embodiments, the winding member 2 may be provided with a channel 21. The separation membrane 102 can pass through the channel 21.

In some embodiments, the winding member 2 includes two winding half shafts 22 arranged opposite to each other, and the separation membrane 102 is configured to pass between the two winding half shafts 22.

For example, the winding half shafts 22 may take the form of a semi cylindrical, semi elliptical cylindrical, or other shapes.

A channel 21 is formed between the two winding half shafts 22. Before the winding member 2 located at the winding station P1 winds the electrode sheet 101 and the separation membrane 102, a part of the separation membrane 102 passes through the channel 21 and is wound onto the winding member 2 located at the non-winding station P2.

The positions of the two winding half shafts 22 may be relatively fixed; of course, the two winding half shafts 22 may also be close to or far from each other. For example, the winding half shaft 22 may be a semicircular shaft.

After the electrode assembly is formed, the separation membrane 102 between the two winding half shafts 102 is located inside the electrode sheet 101, which can increase the layer amount of the separation membrane 102 at the winding center of the electrode assembly, so as to reduce the risk of lithium dendrites piercing the separation membrane 102 and improve safety of the electrode assembly.

In some embodiments, the winding member 2 further includes two clamping members 23 arranged opposite to each other and installed on the two winding half shafts 22 respectively, and the two clamping members 23 can move relative to each other to clamp the separation membrane 102.

The two clamping members 23 can approach or go away from each other. Optionally, one clamping member 23 is fixed to one of the winding half shafts 22, and the other clamping member 23 is movably connected to the other winding half shaft 22 to achieve approaching or separating of the two clamping members 23. Of course, alternatively, the two clamping members 23 both can be movably connected to the two winding half shafts 22.

Before the winding member 2 winds the electrode sheet 101 and the separation membrane 102, a part of the separation membrane 102 passes between the two clamping members 23. When the winding member 2 is required to rotate so as to wind the separation membrane 102 and the electrode sheet 101, the two clamping members 23 can approach each other so as to clamp the separation membrane 102, reduce the looseness of the separation membrane 102 during winding, reduce the risk of the separation membrane 102 wrinkling, and improve safety of the electrode assembly.

Compared to the solution using two winding half shafts 22 to clamp the separation membrane 102, this embodiment uses a clamping member 23 to clamp the separation membrane 102, which can fix the positions of the two winding half shafts 22 relative to each other, thereby simplifying the structure of the winding member 2.

For example, the winding member 2 can move in its own axial direction. As shown in Figs. 1 and 2, when the two winding members 2 exchange positions, the winding member 2 moving towards the winding station P1 can insert, by its own axial movement, the separation membrane 102 into the channel 21 of the winding member 2 moving to the winding station P1.

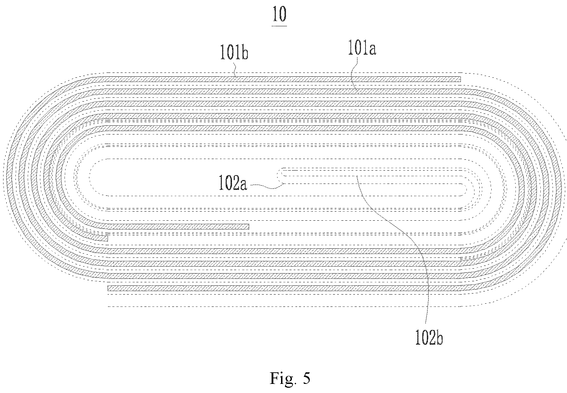

Fig. 5 is a schematic view of an electrode assembly wound by a winding device of some embodiments of the application.

As shown in Fig. 5, in some embodiments, the electrode assembly 10 includes two electrode sheets and two separation membranes, and the two electrode sheets are a positive electrode sheet 101a and a negative electrode sheet 101b respectively. The two separation membranes may be referred to as a first separation membrane 102a and a second separation membrane 102b respectively.

The first separation membrane 102a is folded into two layers at the winding-start end, and the second separation membrane 102b is folded into two layers at the winding-start end. The four-layer separation membrane structure formed by the first separation membrane 102a and the second separation membrane 102b is wound for a plurality of turns, so that there are a plurality of layers of the separation membrane 102 between the innermost turn of the positive electrode sheet 101a and the innermost turn of the negative electrode sheet 101b, and as a result, when lithium precipitation occurs, the possibility of lithium dendrites piercing the separation membrane 102 is reduced, the risk of contact short circuit of the positive and negative electrodes is reduced, and safety is improved.

For example, after the electrode assembly 10 is loaded or unloaded from the winding member 2 located at the non-winding station P2, the electrode assembly 10 may be subject to hot pressing to produce a flat electrode assembly 10 as shown in Fig. 5.

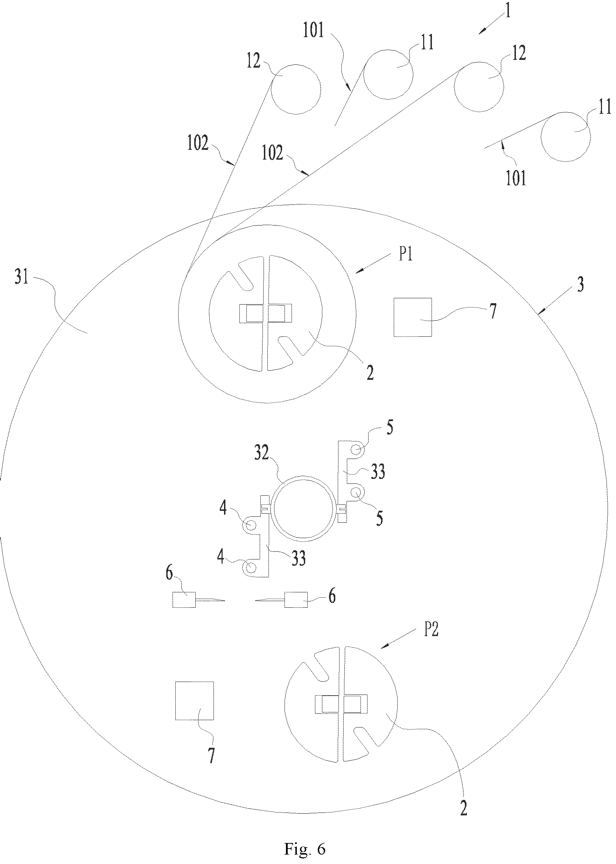

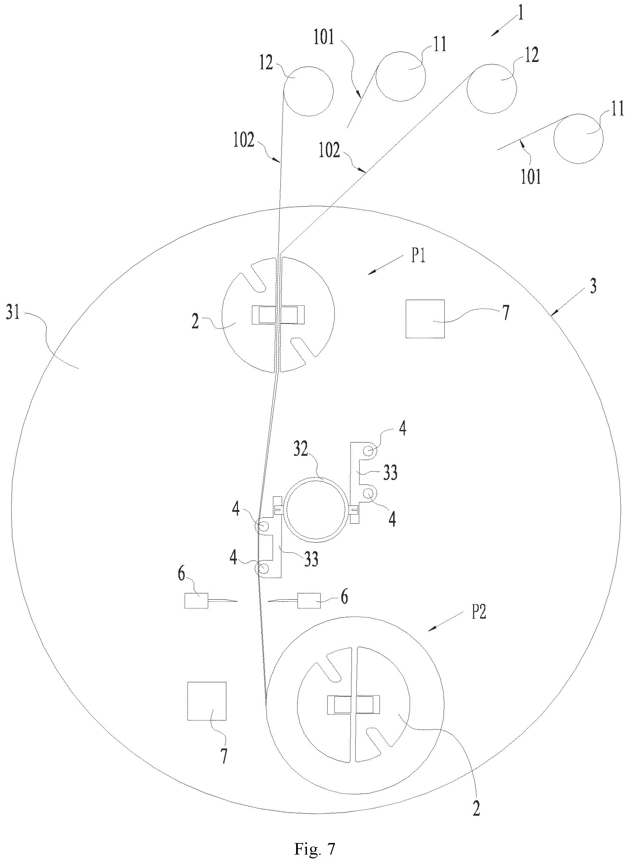

Fig. 6 is a schematic structural view of a winding device provided by a specific embodiment of the application; Fig. 7 is a schematic view of the winding device of Fig. 6 in another state.

As shown in Figs. 6 and 7, in some embodiments, the winding device further includes a switching mechanism 3, and the two winding members 2 are arranged on the switching mechanism 3. The switching mechanism 3 is used to drive each of the winding members 2 to move between the winding station P1 and the non-winding station P2.

The embodiments of the application do not limit the way in which the switching mechanism 3 moves the winding member 2. For example, the switching mechanism 3 may drive the winding member 2 to move by rotating, or may also move the winding member 2 in a way of multi-directional linear translation.

By providing the switching mechanism, the embodiments of the application can cause the winding member 2 to automatically switch between the winding station P1 and the non-winding station P2, improving winding efficiency and achieving industrial production of the electrode assembly.

In some embodiments, the switching mechanism 3 is configured to be rotatable. The switching mechanism 3 can drive a plurality of winding members 2 to rotate around a rotation axis of the switching mechanism 3, so as to facilitate switching of each winding member 2 between the winding station P1 and the non-winding station P2, thereby simplifying the structure of the winding device and improving switching efficiency.

In some embodiments, the winding device further includes a first roller 4 and a second roller 5 arranged on the switching mechanism 3, and the first roller 4 and the second roller 5 are centrosymmetric about a rotation axis of the switching mechanism 3. One of the first roller 4 and the second roller 5 is used to guide the separation membrane 102 between the two winding members 2 to move.

The amount of the first roller 4 may be one or more, and the amount of the second roller 5 may be one or more. In some examples, the amount of the first roller 4 is plural, the amount of the second roller 5 is plural, and the entirety composed of the plurality of first rollers 4 and the plurality of second rollers 5 is centrosymmetric about the rotation axis of the switching mechanism 3.

In the embodiments of the application, the first roller 4 and the second roller 5 are centrosymmetric about the rotation axis of the switching mechanism 3. As the switching mechanism 3 rotates, the first roller 4 and the second roller 5 can alternately support and guide the separation membrane 102 to move, and provide effective support for the separation membrane 102.

In some embodiments, the switching mechanism 3 includes a rotary plate 31, a rotary drum 32 and two brackets 33. The two winding members 2 are arranged on the rotary plate 31. The rotary drum 32 is arranged on the rotary plate 31 and located between the two winding members 2. The two brackets 33 are arranged on two sides of the rotary drum 32 respectively and fixed to the rotary drum 32, and the first roller 4 and the second roller 5 are arranged on the two brackets 33 respectively.

The application does not require the rotary drum 32 to be located in the middle of the two winding members 2. In the arrangement direction of the two winding members 2, it is sufficient that there is an overlapping part between the rotary drum 32 and the winding member 2.

The rotation axis of the rotary plate 31 is the rotation axis of switching mechanism 3. For example, the rotary plate 31 and the rotary drum 32 may rotate coaxially.

When the rotary plate 31 drives the winding members 2 to move between the winding station P1 and the non-winding station P2, it also drives the rotary drum 32 to rotate; correspondingly, the rotary drum 32 drives the first roller 4 and the second roller 5 to rotate around a rotation axis of the rotary drum 32 through the two brackets 33, so that the first roller 4 and the second roller 5 alternately support and guide the separation membrane 102 to move, reducing the risk of wrinkling of the separation membrane 102 due to the movement of the winding members 2.

In some embodiments, the winding device further includes a cutting blade mechanism 6, and the cutting blade mechanism 6 is arranged between the two winding members 2 and used to cut off the separation membrane 102.

After the winding member 2 located at the non-winding station P2 unwinds the separation membrane 102 thereon for a preset size, the cutting blade mechanism 6 can cut off the separation membrane 102, so as to reduce the risk of excessive release of the separation membrane 102 by the winding member 2 located at the non-winding station P2, so that the size of the separation membrane 102 wound on the winding member 2 located at the non-winding station P2 meets the requirements.

In some embodiments, the two winding members 2 have the same shape and the same size.

The shape and size in the embodiments of the application refer to the shape and size of the effective part for winding of the winding member 2.

The embodiments of the application can continuously produce electrode assemblies of the same specification and reduce the difficulty of controlling the winding device.

In some embodiments, the winding device further includes a driver 7 for driving the winding member 2 and switching a rotation direction of the winding member 2.

When the winding member 2 is located at the winding station P1, the driver 7 can drive the winding member 2 to rotate in a positive direction to wind the electrode sheet 101 and the separation membrane 102; when the winding member 2 is located at the non-winding station P2, the driver 7 can drive the winding member 2 to rotate in the opposite direction to release the separation membrane 102.

For example, one of the positive and negative directions is the clockwise direction, and the other is the counterclockwise direction.

In some embodiments, the driver 7 may be a bidirectional motor.

In a specific embodiment, the winding device may perform winding in the following manner.

As shown in Fig. 6, the winding member 2 located at the winding station P1 can wind the electrode sheet 101 and the separation membrane 102 for a preset amount of turns by rotating.

As shown in Fig. 7, the rotary plate 31 rotates 180° counterclockwise to move the winding member 2, which is wound with the electrode sheet 101 and the separation membrane 102, to the non-winding station P2. At the same time, driven by the rotary plate 31 and the rotary drum 32, the first roller 4 and the second roller 5 exchange positions to cause the separation membrane 102 to pass through the second roller 5.

During rotation of the rotary plate 31, the winding member 2 wound without separation membrane 102 and the electrode sheet 101 can retract in its own axis direction to avoid the separation membrane 102 and other components. When the winding member 2 wound without the separation membrane 102 and the electrode sheet 101 reaches the winding station P1, the winding member 2 can extend in its own axis direction to insert the separation membrane 102 into the channel 21 of the winding member 2.

Then the winding member 2 moving to the winding station P1 starts winding the separation membrane 102 and the electrode sheet 101, and at the same time, the winding member 2 located at the non-winding station P2 rotates and releases a part of the separation membrane 102 wound thereon, so that the released part of the separation membrane 102 is wound onto the winding member 2 located at the winding station P1. The part of the separation membrane 102 released by the winding member 2 located at the non-winding station P2 and the separation membrane 102 newly provided by the feeding mechanism 1 are stacked between the electrode sheets 101, so that there are a plurality of layers of the separation membrane 102 between the electrode sheets 101.

When the separation membrane 102 released by the winding member 2 located at the non-winding station P2 reaches the preset size, the cutting blade mechanism 6 cuts off the separation membrane 102, so that the separation membrane 102 and the electrode sheet 101 wound on the winding member 2 located at the non-winding station P2 form an electrode assembly 10. After the electrode assembly 10 is formed, it can be taken out from the winding member 2.

After the winding member 2 located at the winding station P1 winds the electrode sheet 101 and the separation membrane 102 for a preset amount of turns, the next cycle is entered.

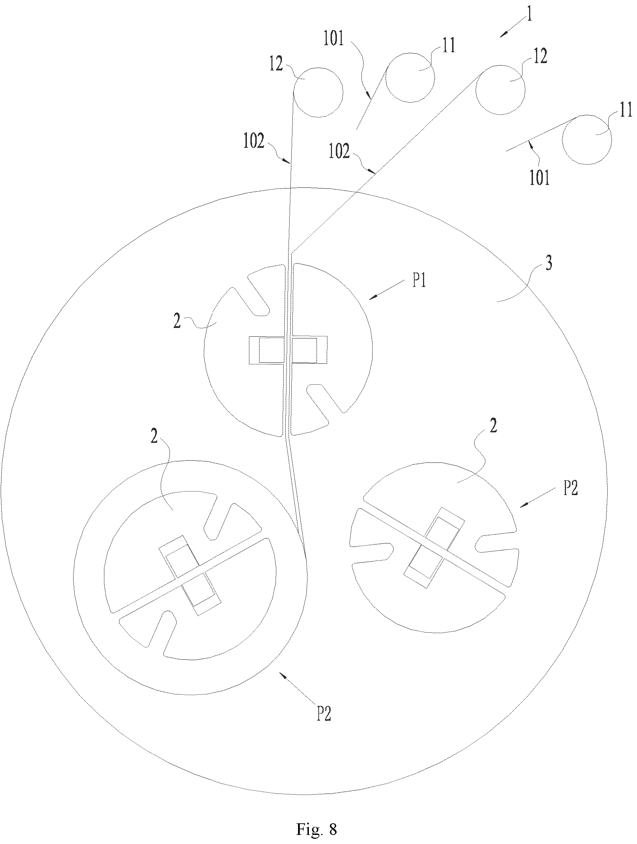

Fig. 8 is a schematic structural view of a winding device provided by another embodiment of the application.

As shown in Fig. 8, in some embodiments, the amount of the winding members 2 may be three or more.

In some embodiments, the winding device includes three winding members 2, and correspondingly, the winding device is provided with one winding station P1 and two non-winding stations P2.

For example, in Fig. 8, the upper winding member 2 is located at the winding station P1, which is used to wind the electrode sheet 101 and the separation membrane 102. The lower left winding member 2 is located at one non-winding station P2, which is used to release the separation membrane 102. The lower right winding member 2 is located at the other non-winding station P2, and the electrode assembly 10 wound on this winding member 2 may be unloaded at this non-winding station P2.

The switching mechanism 3 may rotate counterclockwise to simultaneously switch the positions of three winding members 2.

As shown in Figs. 1 to 7, the embodiments of the application provide a winding device including a feeding mechanism 1, two winding members 2, a switching mechanism 3 and a cutting blade mechanism 6.

The feeding mechanism 1 includes two electrode sheet feeding devices 11 and two separation membrane feeding devices 12. The electrode sheet feeding devices 11 are used to provide the electrode sheet 101, and the separation membrane feeding devices 12 are used to provide the separation membrane 102.

The winding device is provided with a winding station P1 and a non-winding station P2. The two winding members 2 are arranged at the switching mechanism 3, and the switching mechanism 3 can drive each of the winding members 2 to move between the winding station P1 and the non-winding station P2 by rotating.

The two winding members 2 are configured as follows: when one of the winding members 2 winds the electrode sheet 101 and the separation membrane 102 for a preset amount of turns at the winding station P1, said one of the winding members 2 moves from the winding station P1 to the non-winding station P2, so as to cause the separation membrane 102 to pass through the other of the winding members 2 moving to the winding station P1; said one of the winding members 2 releases a part of the separation membrane 102 wound on said one of the winding members 2 when the other of the winding members 2 winds the electrode sheet 101 and the separation membrane 102, so as to cause the part of the separation membrane 102 released by said one of the winding members 2 to be wound onto the other of the winding members 2.

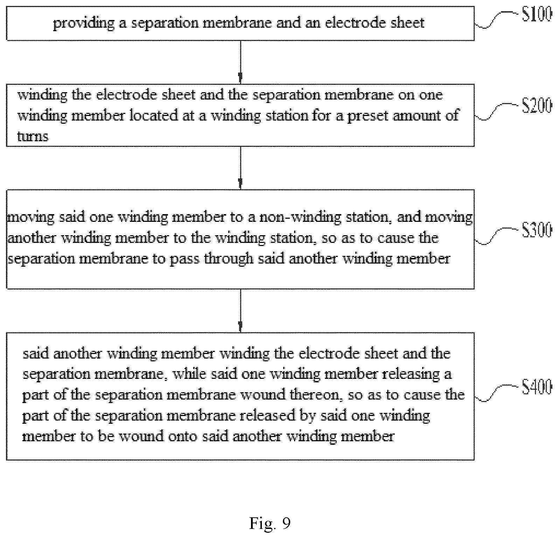

Fig. 9 is a schematic block diagram of a winding method provided by some embodiments of the application.

As shown in Fig. 9, the winding method of the embodiments of the application includes:
S 100, providing a separation membrane and an electrode sheet;
S200, winding the electrode sheet and the separation membrane on one winding member located at a winding station for a preset amount of turns;
S300, moving said one winding member to a non-winding station, and moving another winding member to the winding station, so as to cause the separation membrane to pass through said another winding member;
S400, said another winding member winding the electrode sheet and the separation membrane, while said one winding member releasing a part of the separation membrane wound thereon, so as to cause the part of the separation membrane released by said one winding member to be wound onto said another winding member.

The embodiments of the application, by switching the position of each winding member, can achieve continuous winding of the electrode assembly, reduce manual threading processes, improve winding efficiency and reduce costs. When the winding member rotates and begins to wind the electrode sheet and separation membrane, the separation membrane released by the traction member and the newly transported separation membrane are stacked and wound around the outer circumference of the winding member, and thereby there are a plurality of layers of the separation membrane between the positive and negative electrode sheets in the inner turns, so that the possibility of lithium dendrites piercing the separation membrane is reduced when lithium precipitation occurs, the risk of short circuit between the positive and negative electrode sheets is reduced, and safety is improved.

In some embodiments, the winding method further includes a step S500: after a size of the separation membrane released by one winding member reaches a preset size, cutting off the separation membrane between the one winding member and another winding member.

After the winding member located at the non-winding station unwinds the separation membrane thereon for a preset size, the separation membrane is cut off, so as to reduce the risk of excessive release of the separation membrane by the winding member located at the non-winding station, so that the size of the separation membrane wound on the winding member located at the non-winding station meets the requirements.

In some embodiments, the winding method further includes a step S600: taking out an electrode assembly formed by the electrode sheet and the separation membrane on said one winding member. Said one winding member is a winding member located at the non-winding station.

After cutting off the separation membrane, the electrode assembly on the winding member located at the non-winding station is taken out to allow the winding member to enter the next winding cycle.

It should be noted that, in the case of no contradiction, the embodiments in the application and the features in the embodiments may be combined with each other.

At last, it should be appreciated that the above embodiments are only used to illustrate the technical solutions of the application but not to limit the same. A person of ordinary skill in the art is to understand that it is still possible to modify the technical solutions described in the above embodiments or equivalently replace some of the technical features thereof while the modifications and replacements shall not render the substance of the corresponding technical solutions deviate from the spirit and scope of
the technical solutions in the various embodiments of the application.

## Claims

1. A winding device, comprising a feeding mechanism and at least two winding members, the feeding mechanism being used to provide an electrode sheet and a separation membrane;
the winding device is provided with a winding station and a non-winding station, and each of the winding members is movable between the winding station and the non-winding station;
the at least two winding members are configured as follows: when one of the winding members winds the electrode sheet and the separation membrane for a preset amount of turns at the winding station, said one of the winding members moves from the winding station to the non-winding station, so as to cause the separation membrane to pass through another of the winding members moving to the winding station; said one of the winding members releases a part of the separation membrane wound on said one of the winding members when said another of the winding members winds the electrode sheet and the separation membrane, so as to cause the part of the separation membrane released by said one of the winding members to be wound onto said another of the winding members.

2. The winding device according to claim 1, further comprises a switching mechanism, and the two winding members are arranged on the switching mechanism;
the switching mechanism is used to drive each of the winding members to move between the winding station and the non-winding station.

3. The winding device according to claim 2, wherein the switching mechanism is configured to be rotatable.

4. The winding device according to claim 3, further comprises a first roller and a second roller arranged on the switching mechanism, and the first roller and the second roller are centrosymmetric about a rotation axis of the switching mechanism;
one of the first roller and the second roller is used to guide the separation membrane between the two winding members to move.

5. The winding device according to claim 4, wherein the switching mechanism comprises:
a rotary plate, the two winding members being arranged on the rotary plate;
a rotary drum arranged on the rotary plate and located between the two winding members; and
two brackets arranged on two sides of the rotary drum respectively and fixed to the rotary drum, the first roller and the second roller being arranged on the two brackets respectively.

6. The winding device according to any of claims 1-5, further comprises a cutting blade mechanism, and the cutting blade mechanism is arranged between the two winding members and used to cut off the separation membrane.

7. The winding device according to any of claims 1-6, wherein the two winding members have a same shape and a same size.

8. The winding device according to any of claims 1-7, further comprises a driver for driving the winding member and switching a rotation direction of the winding member.

9. A winding method, comprising:
providing a separation membrane and an electrode sheet;
winding the electrode sheet and the separation membrane on one winding member located at a winding station for a preset amount of turns;
moving said one winding member to a non-winding station, and moving another winding member to the winding station, so as to cause the separation membrane to pass through said another winding member;
said another winding member winding the electrode sheet and the separation membrane, while said one winding member releasing a part of the separation membrane wound thereon, so as to cause the part of the separation membrane released by said one winding member to be wound onto said another winding member.

10. The winding method according to claim 9, further comprises:
after a size of the separation membrane released by said one winding member reaches a preset size, cutting off the separation membrane between said one winding member and said another winding member;
taking out an electrode assembly formed by the electrode sheet and the separation membrane on said one winding member.
